# EUROPEAN PATENT APPLICATION

(11) **EP 2 774 906 A1**
(43) Date of publication of application: **10.09.2014**
(21) Application number: 12840059.5
(22) Date of filing: 11.10.2012
(51) Int. Cl.: C05C 9/00

(54) **ENCAPSULATED NITROGENATED FERTILIZER COMPOSITION WITH FIRE-EXTINGUISHING AND FIRE-SPREAD PREVENTING OPTION, CORRESPONDING METHOD FOR MANUFACTURING SAME AND METHOD OF USE THEREOF**

(30) Priority: 14.10.2011 BR PI1106423
(71) Applicant: ECOPLUS COMPANY COMERCIAL LTDA-ME, 80.010.200 Curitiba (BR)
(72) Inventor: CARMO, Hélio Mauricio do, CEP-22775-046 Rio de Janeiro (BR)
(74) Representative: Pereira da Cruz, Joao
(86) International application number: PCT/BR2012/000387
(87) International publication number: WO 2013/053031

(57) **Abstract**

The present patent refers to encapsulated fertilizing compositions with slow and gradual release of nitrogen in form of ammonium and incorporation of several cultures, which when having its coating complemented or replaced by specific components and applied diluted in water, it synergistically acts as fire extinguisher and fire spread preventer, its manufacturing process and its application process that are aimed to avoid that the nitrogen compound or potassium contents disintegrate, has as purpose reducing the release of nitrogen in form of ammonia to plants and incorporating macronutrients and micronutrients in the nitrogen compound and in potassium, adding value to these, further increasing the resistance and improving growth of plants and the protection of their development, it provides better distribution and uniformity by launching into furrow or by pouring, reduces the deficit on carbon credit, reduces costs for farmers, avoids limitation of shares and external shipping control of compounds, can be applied directly with the seed, avoids rotting and burn of seed and root, can use the same equipment, thus raising the productivity, facilitating the launching and reducing the time for application either into furrow or also by pouring, ultimately facilitating the stocking and handling operations and overall management of all fertilizers.

## Description

The present patent refers to encapsulated fertilizing components with slow and gradual release of nitrogen in form of ammonium and incorporation of several cultures, which when having its coating complemented or replaced by specific components and applied diluted in water, it synergistically acts as fire extinguisher and fire spread preventer, its manufacturing process and its application process that are aimed to avoid that the nitrogen compound or potassium contents disintegrate due to natural action or immediately caused by microorganisms in soil and in straw, excess of water or excessive natural heat, has as purpose reducing the release of nitrogen in form of ammonia to plants and incorporating macronutrients and micronutrients in the nitrogen compound and in potassium, adding value to these, further increasing the resistance and improving growth of plants and the protection of their development, it provides better distribution and uniformity by launching into furrow or by pouring, reduces the deficit on carbon credit, reduces costs for farmers, avoids limitation of shares and external shipping control of compounds, can be applied directly with the seed, avoids rotting and burn of seed and root, can use the same equipment, thus raising the productivity, facilitating the launching and reducing the time for application either into furrow or also by pouring, ultimately facilitating the stocking and handling operations and overall management of all fertilizers. Finally, the fertilizers and processes of the present patent provide improved yield, profitability, handling, input and production costs and agronomic efficiency, in addition to lower losses and environmental impact.

As the technical means linked to manufacturing and application of nitrogen fertilizers are widely known, currently the compounds found in the market contain polymers in their content and there is no incorporation of macro- and micro-nutrients in the same product during its manufacture process, which adds value to the product. The current application of nitrogen compounds generates a large deficiency in carbon credit and increases the costs for farmers who often need to reduce or increase the quantity of dosages due to unexpected losses as result of great influence of weather, such as excessive sun or rain that soaks the fields and crop lands, in addition to the limitations of shares and external shipping control of the compounds. The carbon credit is directly bound to reduction of the oil byproduct process from its manufacturing to direct losses in application due to volatilization of ammonia, where the loss may reach up to 80% of nitrogen contained, which is approximately 46% and movement of tractors and trucks for applying each nutrient element, as it is already embedded in the proposes composition.

The current compositions and their manufacturing processes result in the following disadvantages, limitations and inconvenience:
The current compositions cannot be applied directly with the seed, and the current coatings cause rotting or burn the seed and root due to the high level of acid or water absorption by the polymer and when applied onto leaves, such compositions also harm due to same situation, as the polymers easily loss their structure when in contact with an alkaline environment or product, which is the case of calcium application for soil control and source of the element for strengthening from stalk to fruit. Most of the coated products always get sticky and present complications for application.

Other disadvantages are that these products are unable to being used in the same equipment, thus reducing the productivity, making it difficult to launch and increasing the time of application whether into farrow and also by pouring, as well as jeopardizing the operations of storage and handling all the fertilizers.

Both current fertilizers and processes need to be improved when it comes to yield, agronomic efficiency, losses, environmental impact, profitability, handling, and input and production costs.

Finally, the current fertilizing compositions have no additional function to extinguish or block the fire action and also cannot be applied along with the seeds during the planting.

By researching the Brazilian and abroad patent databases, we found the following disclosures:
1. Brazilian Patent PI0015146-7 A2 Coating Agent and Coated Particulate Fertilizers. The present invention refers to a coated fertilizer, supplied through a method for producing coated fertilizer, in which the coated fertilizer provides a coating consisting of at least one amine compound, which is a primary, secondary or tertiary amine, made of straight or branched chain of hydrocarbon or an amine containing a cyclic hydrocarbon radical and a micro-crystalline wax, paraffin wax, or a soft synthetic wax.
2. Brazilian Patent PI9906487-1 A2 Controlled Release Pre-coated Fertilizers and Processes for its Preparation. Controlled release fertilizer formed from nutrient grains that have pre-coat or intermediate layers of organic oil, such as linseed oil, prior to application of an encapsulating polymeric cover. The pre-coat may also contain an agglutination agent, such as fine clay, and a secant. The new fertilizer composition is done through a process of applying pre-coating oil, but not curing it until the encapsulating cover is applied. Use of precoat provides more desirable controlled release characteristics (delaying) to a lighter weight of encapsulating cover, particularly for nutrient cores that have a relatively large number of discontinuities or surface flaws.
3. Brazilian Patent PI0101344-0 A2 Product containing Controlled Release Urea and Preparation Method for the mentioned Product. The present invention refers to a product containing controlled release urea and a preparation process of the said product consisting of urea pre-coated with cement or insoluble metal salt and afterwards coated with one or more layers of solution at 20-50% gum resin in fatty acid or vegetable oil at temperature of 20-80°C and which the contents of gum resin in finished product vary from 2 to 15% in weight, being that substances such as magnesium oxide in a ratio of 2 to 20% in finished product weight are applied through sprinkling between the gum resin layers.
4. United States Patent 4,565,564 Coated Fertilizer Particles. Metal oxides are applied to the surface of urea particles and chemically bonded to the urea by a heat-induced reaction. The product of this reaction is a free-flowing, relatively non-hygroscopic nitrogenous chemical fertilizer. By selecting metal oxides corresponding to a particular soil deficiency, beneficial micronutrients can be supplied simultaneously with nitrogen. Other materials, such as elemental sulfur, can be incorporated into the metal oxides prior to coating or can be liquefied and applied as a separate additional coating to the metal oxide-urea particles. In another embodiment, fertilizer particles are coated with metal oxides, covered with molten urea, and heated to induce a reaction. The formed reaction product remains as a layer on the exterior of the particle.
5. United States Patent 4857098 (A) Sulfur-Coated Fertilizer Granules and Process of Making same. Sulfur coated plant fertilizer granules, each such granule including a core granule of fertilizer having a crystalline component, a bonding layer having a mixture of the fertilizer granule crystalline component and crystalline sulfur, coating the granule, the bonding layer crystalline fertilizer component being integral with the fertilizer granule crystalline component at the bonding layer-granule interface, and an outer layer of sulfur having crystallized sulfur, the outer layer sulfur being integral with the bonding layer sulfur at the bonding layer-outer layer interface, the crystalline fertilizer component of the bonding layer and the sulfur of the bonding layer being interwoven, enabling the sulfur outer layer to be tightly bound to the fertilizer granule. A method for producing the granules includes the steps of applying molten fertilizer and molten sulfur, simultaneously, to the surface of the fertilizer granules such that the urea and sulfur solidify on the surface of said urea granules forming a layer including fertilizer and crystalline sulfur and then applying molten sulfur alone to the fertilizersulfur coated granules such that the sulfur solidifies as a second coating, forming an outer layer including crystalline sulfur, thus enabling the sulfur outer layer to be tightly bound to the fertilizer granules.
6. English Patent GB 1095104 (A) Improvements in or Related to Powder Fertilizers. A diluent which prevents caking of a fertilizer composition comprises a powder ground to a particle size of not more than 10 microns, dried to a moisture content of not more than 0.05%, and coated with a hydrogen silane or silicone oil at 90-120 DEG C., the proportion of diluent being 1-25% and the proportion of silicon compound being at least 0.6%. The fertilizer constituent has a moisture content of up to 0.3%. Powder diluents specified are talc, mica, basic slag, barite, fly-ash, and calcium phosphate. Fertilizer constituents specified are calcium ammonium nitrate and diammonium phosphate: a diluent which prevents caking of a fireextinguishing composition comprises a powder ground to a particle size of not more than 10 microns, dried to a moisture content of not more than 0.05%, and coated with a hydrogen silane or silicone oil at 90-120 DEG C, the proportion of diluent being 1-25% and the proportion of silicon compound being at least 0.6%. The fire-extinguishing constituent has a moisture content of up to 0.3%. Powder diluents specified are talc, mica, basic slag, barite, fly-ash, and calcium phosphate. Fire-extinguishing constituents specified are sodium and potassium bicarbonate, mono and diammonium phosphate, ammonium sulphate, potassium chloride, and urea.
7. Chinese Patent CN 1130609 (A) Long-Acting Urea Covered with Rare-Earth. The long-lasting action characteristics of fertilizer urea are the insertion of urea in the core part and the mixture of rare earths, calcium clay and external coating with nitrates forming a wrap. The utilization rate and prolonged action of urea are increased. Its rare-earth component can promote development of plant root, branch and leaf and also photosynthesis, ultimately increasing the yield.

"ENCAPSULATED NITROGEN FERTILIZER COMPOSITION WITH FIRE-EXTINGUISHING AND FIRE-SPREADING PREVENTING OPTION, CORRESPONDING MANUFACTURE PROCESS AND APPLICATION PROCESS", object of the present invention was designed to solve the problems, limitations and disadvantages of existing products and processes, as they reduce release of nitrogen in the form of ammonia to plants, incorporate macro- and micro-nutrients in the same product, adding value to it, reduce the deficit in carbon credit, lower costs for farmers, avoid the limitation of shares and external shipping control of the compounds, can be applied directly to the seed, and to avoid rotting and burning the seed and root, may use the same equipment so as to increase productivity, thus facilitating the launching and reducing the time frame of application either into the furrow and also by pouring, facilitating storage and handling operations and management for all fertilizers. Finally, the fertilizers and processes of the present patent provide improved yield, better profitability, best management, improved agronomic efficiency, lower input and production costs and reduced losses and lower environmental impact and fire extinguishing and fire spreading prevention option.

The compositions of the present patent solved the following issues for the current compositions:
1. Using large amount of pollutant, expensive oil byproducts. This problem was solved by means of reducing the nitrogen-content compounds, providing an extended carbon credit and a direct saving to farmers, who often need to reduce or increase the dosages due to unpredicted losses as result of great influence from weather, such as excessive sun or rain that soaks fields and crop sites, in addition to quotas and external embargo control of compounds, meaning that the producer that needs 200 tons and have only a quota of 100 tons, is with the 200 in the 100 coated with the process (example), leveraging the nitrogen-content contained.
2. No direct application of the fertilizer with the seed, since the current polymer coatings cause decay or burning of the seed or root due to the high acid content and water absorption in the polymer become sticky and are applied on the leaves without also attacking them due to the same situation, this is because it is easy to the polymer lose their structure when it encounters an alkaline environment or product, which is the case of application of calcium for soil control and source of element for fortification from the stem to the fruit. This problem was solved by the present invention, as it is able to obtain an always dried and packed product, resistant to weather conditions of storage and handling.
3. The current fertilizers not allow a distribution and uniformity in application into furrow and by pouring, use a large amount of nitrates and soil controllers and their coating not protects against microorganisms, specially the urease, not control plagues and also do not provide elements for sustaining the plant from root to stem. This problem was solved by the fertilizer of the present patent, which has an optimized composition that provides improved distribution and uniformity in launching into furrow or by pouring, even when the fertilizer becomes deposited onto the soil, it does not allow excess due to coating of the main component (nitrogen compound) it and can reduce as much as seventy-five percent of the nitrogenous compound amount when it contains sodium molybdate or ammonium its coat, which enhances it by the coating and microorganisms in particular that the urease nitrogen does not encounter the nitrogeneous element in surface and for containing soil control element in their coat, and which is also used for pest control, it controls the pH interfering immediately in the proliferation of microorganisms and also provides additional support of plant from root to the stem, the calcium evenly supplied is provided in each prill (grain), reducing excessive amounts of soil controlling elements, which are often insoluble and incompatible with other elements essential to plant growth.
4. The current fertilizers chemically contaminate the water from rivers and affluents. This problem was solved by the fertilizer of the present patent due to its composition and cropping process that does not contaminate rivers and affluents; and
5. The current fertilizers have no additional feature of extinguishing fire and avoiding fire propagation into cultures, woods, or forests. This problem was solved by the composition and manufacturing and application process of the fertilizer referred in the present patent that when diluted may be also applied in several cultures, woods and forests to aid in reduction and extinction of fires, by taking advantage from the potential of the nitrogen compounds, which is an exceptional fire-extinguisher element due to ammonium releasing when exposed to excessive heat. This characteristic causes the fire to be held for longer period in the same location and during the above mentioned ammonium release, it reduces the flame heights and cools down the area, thus avoiding the progression of the heat radiation.

The composition of the present patent provides the following benefits:
1. Immediate reduction of nitrogen compounds percent and improved benefit from nitrogen element, avoiding loss by volatilization and the direct contact of urea with soil, thus inhibiting its degradation, the coating reduces the loss by protecting the fertilizer against weather conditions and contributes to slow releasing of nutrients, preventing them to be removed with water penetrating the soil and bringing the eutrophication. Also contributing to economy of diesel and machinery time. It is possible to significantly reduce the nitrogen losses in form of ammonia over the atmosphere and still promote the fertilization efficiency. For the environment, it provides lower greenhouse effect by the non-volatilized gases, granting economy of natural resources, such as petroleum and natural gas.
2. The combination of coating elements promotes dosing balance of micronutrients and micronutrients to the plants and significantly protects them against urease (enzyme that strongly attacks the urea causing loss of up to 80% pf availability from the 46% of nitrogen compound in the formation of element and the calcium phosphate strengthens the structure of plants against diseases and plague attack, provides efficiently better distribution of the micronutrients essential to cultivation, providing improved and greater agronomic yield, thus establishing a revolution in usage by empowering the application and diminishing the quantity by allowing better performance with lower quantity, and this means the reduction of environmental impacts regarding nutrition of plants.
3. Benefits from direct utilization:
   A) Slow release of nitrogen in form of ammonia to the plants;
   B) Incorporation of micro and macronutrients in the envelope;
   C) Improved distribution of fertilizer per application;
   D) Balance in distribution of micronutrients onto soil and plant;
   E) Better agronomic efficiency;
   F) Prevent loss by leaching and extreme temperatures;
   G) Time gain in its application from seed to harvest;
   H) Enrichment of soil;
   I) Does not burn the seed and plant when applied;
   J) Resistance to high temperatures;
   L) Not affected by microorganisms and "Urease" reaction;
   M) Reduces from 50% to 75% the application of nitrogen content, when incorporates molybdate.
4. Extra benefits:
   A) It can reduce from 50% to 75% of nitrogen-content in Sugarcane cultivation and others with addition of molybdate.
   B) CO₂ reduction by emission in application due to "Urease" action;
   C) CO₂ reduction by production of urea;
   D) Immediate increase of nitrogen fertilizer quotas to the farmer;
   E) Reduction of storage, increase of physical space;
   F) Immediate raise of finished product expiration date;
   G) Productivity increase in several cultures (corn-cane-wheat-etc..);
   H) Incorporation of micronutrients according to farmer requirements;
   I) Always loose and free in elevated temperatures;
   M) Can be applied directly with the seed;
   N) In the incorporation, it leverages the nitrogen power of product by withholding the content, which is approximately 46%;
   O) Immediate common urea loss on the soil reaches up to 80%, due to urease reaction, in the incorporation of the fertilizer from the present patent, there is no loss at all, as is not suffers this reaction;
   P) Incorporation is done by elements that are common and needed to the applied culture. (adding value to the product);
   Q) In importing of nitrogen compound (common urea) when the fertilizer technique of the present patent is used, it can achieve 50% to 75% upward, with the same quantity imported. (the explanation for this is that there is no loss, when applied to soil);
   R) Same case as national production, it increases productivity with the same plant in the embedding technique. For example: Produces 1000 t, could achieve up to 1750 t as result of leveraging the product application purpose.
   S) The technique of incorporation in nitrogenous compounds can be extended to other elements requiring resistance and empowerment or losses by leaching such as the Potassium one;
   T) The technique also solves the huge environmental problems of Vinhoto, byproduct from Ethanol distillation, where each liter of alcohol (ethanol), produces 13 liters of vinhoto, rich in potassium and other elements; and
   U) The technique makes feasible its use for developing the applied culture and enrichment of several types of soil.

The composition of the present patent has as main element the nitrogeneous compound coated with essential elements proper for the most diverse cultures, such as calcium, modified clay, phosphor, boron, magnesium, sodium or ammonium molybdate, zinc, vegetable oils, carbon, copper, potassium, ammonium and sulfur, everything into a single composition or in doses predetermined by the own farmer according to needs of plant and soil applied and also as per the phases of determined cultures, such as wheat, sugarcane, eucalypti, soy, and among other reforestation cultures and cultivation project requiring elements between leaf growth.

The proposal of composition is a nitrogenous fertilizer encapsulated with basic formula containing fertilizing components with slow and gradual release of nitrogen, able be added with micronutrients within its coating according to demands of each agronomic culture applied, being its coating able to be supplemented or replaced with specific components that act, when diluted in water, as fire extinguisher and blockader against fire propagation.

Therefore, the fireproof product requires some procedures for its application to be efficient as desired, being such procedures directly related to the form of diluting the product in water and the percent of dilution, coverage by m² and range and width of protection as anti-fire shield. To determine the width we must understand the height of flames and fire blaze/tongue, in order to not exceed the protection range and continues the fire at the other side, we can express that always 20% is added beyond the expected calculation, as safety measure, the dilution factor is standard for application by aircrafts and tanker trucks, that is: 10% of product to 90% of water. For direct application with extinguisher in backpacks and coastal pumps and tanker trucks, the value is also 10% of product to 90% of water. The dilution manner shall be always occurs with good agitation. The specific fireproof component is modified clay, which will substitute the limestone and the carbon.

The product of the present patent is a composition of minerals, vegetables, and nitrogen elements that, in addition to its target application, help to combat forest fires and, therefore, it have to meet several mechanisms, since a ready-to-use composition, this means provide stability in their compositional elements, meet the requirement to be a product diluted in fresh or salt water, and remain active during a certain period in reservoir without being applied; offer protection to application equipment, lubricity, viscosity, density and ease of application; enhance the wetting, cooling effect of water, when applied directly to the target; when applied, remain active for at least fifteen days without the presence of water; provide weatherproof resistance; strengthen the vegetable adding resistance to the presence of the incandescent flame glowing through its elements, and retain the ashes as spark point, holding them in place until full or partial carbonization by the permanent presence of fire, be miscible to the environment (vegetation, soil, air, affluents), efficiently comply with handling and not be aggressive to skin, eyes, inhalation and metals.

This composition, in addition to meet the international specifications and standards established by forest fire fighting accredited agencies, is defined for being essential to various planting crops, from sugar cane, corn, soybeans, reforestation among many others, the elements of the composition do not compromise the culture since it refers to nitrogenous compounds and other elements, which are the same as those already used and applied to the planting process, it is a fertilizer, makes immediately available the nitrogen compounds through a film formed after application and evaporation water that is used as a vehicle for application, and the distribution of composition elements, this film is heat resistant and slowly releases the nitrogen present in the form of ammonia and carbon dioxide, and this occurs on a daily basis until the complete absence of compounds, the film is based on cellulose consumed by natural micro-organisms, differently when applied as fertilizer without coating due to immediate losses caused by reaction of urease, there is the ease of being biodegradable, the existing minerals are understood as natural products of the soil such as modified clay or calcium in its structure is therefore evident the non-contamination and aggression, the aggressive disruption of this film occurs through intense heat or fire itself or by wetting as from a constant rain. We understand that the solution applies and coverage per m² is very small and still, on a range, in the prevention as a shield against the action of fire in extinguishing as immediate goal.

The product of the present patent enhances the power of water wetting and cooling in extraordinary percentage of up to 7 times its coolant value up to 05 times its power to retain water on the surface, therefore, there is a decrease on height of the flames and their extinction, still contributing to fighting the residual presence of product prevents re-ignition, promoting more efficient results both in fighting and aftermath, the fact of holding water contained and ammonia released from the reaction is in the modified clay, which is by means of formula, a component aimed to hold the fire in the application line while the ammonia and carbon gas cool down and extinguish the fire.

The result of an application of prepared water solution + product is moistened power up to five times higher and cooling power up to seven times, by considering this information as baseline, we can understand that a coastal backpack, coastal pump, tanker truck and aircrafts, air tractor and C-130 leverage their attack strength in increased number versus applied water. It ultimately results in savings of time, money, pollution and preservation.

The function as a fire-retardant aims to reduce the potential of fire, by diminishing the flame heights and speed in which the fire spreads, and promote the required aid to various maneuvers, for extinguishing and blocking the fire propagation, thus avoiding the re-ignition of fire and continuity of uncontrolled fire.

The compositions controls the fire with natural products already employed by farmers such as the fertilizers, and also prevents fire propagation by creating a natural barrier or protecting shield, as mechanical firebreaks, blocking and extinguishing the fire and avoiding fire re-ignition.

The effect of the protector guard from the applied product is a huge differential in comparison with the other fertilizers and forest fire-retardants, as it promotes in a single product the several effects of being a fertilizer and fights, extinguish and control the fire, either purposeful or criminal. This product can be applied with great safety margins, already taking into account the distance of fire, speed and the location that is required to disrupt it.

It is possible to use the product in a preventive and immediate way, for controlling burnings.

After exhaustive researches and tests, it was obtained the fertilizer composition of the present patent, which is provided with the following formula:
1 - agricultural urea 50 - 80%
2 - vegetable oil 5 - 20%
3 - phosphoric acid 0.000 - 5%
4 - guar gum 0.005 - 7%
5 - powder graphite 0.000 - 5%
6 - dolomitic limestone 0.000 - 15 %
7 - potassium chloride 0.000 - 80%
8 - gypsum 0.000 - 20%

Alternatively, the agricultural urea may be replaced by technical urea in the same proportion ratio; guar gum may be replaced by xanthan gum in the same proportion ratio; dolomitic or magnesium limestone may be replaced by calcium limestone; powder graphite may be replaced by powder carbon; and the gypsum may be replaced by phosphor-gypsum in the same proportion ratio.

After exhaustive researches and tests, it was obtained the fertilizer composition with micro-nutrients in the coating of the present patent, which is provided with the following formula:
1 - agricultural urea 50 - 80%
2 - vegetable oil 5 - 20%
3 - phosphoric acid 0.000 - 5%
4 - guar gum 0.005 - 7%
5 - powder graphite 0.000 - 5 %
6 - dolomitic limestone 0.000 - 15 %
7 - powder zinc 0.000 - 3%
8 - powder copper 0.000 - 3%
9 - sodium molybdate 0.000 - 2%
10 - magnesium 0.000 - 5%
11 - sulfur 0.000 - 5%
12 - borax 0.000 - 2%
13 - potassium chloride 0.000 - 80%
14 - gypsum 0.000 - 20%

Alternatively, the agricultural urea may be replaced by technical urea in the same proportion ratio; guar gum may be replaced by xanthan gum in the same proportion ratio; dolomitic or magnesium limestone may be replaced by calcium limestone; powder graphite may be replaced by powder carbon; sodium molybdate may be replaced by ammonium molybdate in the same proportion ratio; and the gypsum may be replaced by phosphor-gypsum in the same proportion ratio.

After exhaustive researches and tests, it was obtained the fertilizer composition with micro-nutrients and fireproof action in the coating of the present patent, which is provided with the following formula:
1 - agricultural urea 50 - 80%
2 - vegetable oil 5 - 20%
3 - phosphoric acid 0.000 - 5%
4 - guar gum 0.005 - 7%
5 - powder graphite 0.000 - 3%
6 - dolomitic limestone 0.000 - 5%
7 - modified clay 0.000 - 15%
8 - powder zinc 0.000 - 3%
9 - powder copper 0.000 - 3%
10 - sodium molybdate 0.000 - 2%
11 - magnesium 0.000 - 5%
12 - sulfur 0.000 - 5%
13 - borax 0.000 - 2%
14 - potassium chloride 0.000 - 15%
15 - gypsum 0.000 - 20%

Alternatively, the agricultural urea may be replaced by technical urea in the same proportion ratio; guar gum may be replaced by xanthan gum in the same proportion ratio; dolomitic or magnesium limestone may be replaced by calcium limestone; powder graphite may be replaced by powder carbon; sodium molybdate may be replaced by ammonium molybdate in the same proportion ratio; and the gypsum may be replaced by phosphogypsum in the same proportion ratio. For fireproof action, the limestone and the powder carbon or graphite shall be either partially or completely replaced by modified clay.

The preferential composition of the basic fertilizer presented in this patent is as follows:
1 - agricultural urea 70%
2 - vegetable oil 5 %
3 - phosphoric acid 2%
4 - guar gum 1%
5 - powder graphite 2 %
6 - dolomitic limestone 1 %
7 - potassium chloride 10 %
8 - gypsum 9 %

The preferential composition of the basic fertilizer with micronutrients presented in this patent is as follows:
1 - agricultural urea 70%
2 - vegetable oil 5 %
3 - phosphoric acid 2%
4 - guar gum 1%
5 - powder graphite 2 %
6 - dolomitic limestone 1 %
7 - powder zinc 0.05%
8 - powder copper 0.05 %
9 - sodium molybdate 0.05 %
10 - magnesium 0.05 %
11 - sulfur 0.05%
12 - borax 0.05 %
14 - potassium chloride 9.7 %
15 - gypsum 9 %

The preferential composition of the basic fertilizer with micro-nutrients and fireproof protection presented in this patent is as follows:
1 - agricultural urea 70%
2 - vegetable oil 7 %
3 - phosphoric acid 2%
4 - guar gum 1%
5 - powder graphite 2 %
6 - dolomitic limestone 1 %
7 - modified clay 12%
8 - powder zinc 0.05 %
9 - powder copper 0.05 %
10 - sodium molybdate 0.05%
11 - magnesium 0.05 %
12 - sulfur 0.05 %
13 - borax 0.05 %
14 - gypsum 4.7 %

Urea agricultural or technical function is providing ammonium nitrogen and this amount may suffer variations according to insertion of micro-nutrients in its formulation in order to it meet the agronomic requirements of the applied cultures, the input limits of these micro-nutrients are already exposed from minimum to maximum and also as per the percent rates above and all of these are subject to handling and orders according to soil enrichment requirements.

The vegetable oil has as purpose interrupting the instantaneous overheating, preserve the elements and also provide do mixture, with addition of carbon or graphite, an improved performance of lubricity and stability when stored, preserving itself against humidity action and facilitating the launch when applied in the culture and also allowing promotion of an interruption in the calcium reaction, which is alkaline and phosphoric acid, which is acid, and in presence of the urea nitrogenous compound, it would start a significant loss of nitrogen contained in the element, when it is added and the quantity of oil used may be reduced or increased as desired for composition and cannot be above the percent value indicated due to reasons of making the product too wet, besides increasing the needs.

The phosphoric acid has the function of regulator tampering for pH of mean and provider of phosphor element, and its quantity varies according to interest on acidity of the product and of amount of phosphor as the agronomic necessity. The upper values above the indicated would directly result in the corrosive process of product through equipment for the obtaining process when the application process of equipment for desired culture, furthermore requiring a major control with input of vegetable oil, where it would result in having a semi-secant product, jeopardizing the handling, storage and would cause a constant reaction of elements that sometimes is desired to preserve as the nitrogen compound, the calcium and phosphor, providing less service life of finished product and forming a waterproof product, either using calcium or bentonite forming a kind of glass film mass due to oil being drying as the most of vegetable oils.

The guar or xanthan gum serve as to compose, when diluted, an extremely viscous gel to be applied in forest fire fighting within the equipment offered for coating the surfaces (foliage, trunk, soil, etc..) in order to retain water and prevent it from easily burning, thus obtaining a ready-to-use fertilizer in form of prill (grain). It still seals the composition within the reaction, and water releasing occurs through calcium or clay and for being alkaline, provides good diluted elasticity, either in conjunct with limestone or clay, thus promoting a hard-to-breach coating and provided with the required elasticity. The combination of these elements plus the oil, which is part of interest based on coating structure, it is obtained the balance required to preserve the encapsulated nitrogen compound and with porosities needed to provide slow release of nitrogen in form of ammonia to the plants, and also in conjunction with clay or calcium, it forms a sliding layer upon presence of large amount of water, once more preserving the core element, that is the nitrogen compound. The guar or xanthan gum has another purpose when it is required for using to fight forest fires on the vegetation, forming a sliding film and similarly acting as sealant after application, which in this proposal is to be diluted by mixing mechanisms without presence of calcium, the surface become slippery, well slip-through to run among the leaves, branches up to soil. The quantity applied varies so that the values below minimum not provided results and values above are beyond the purpose of application.

The powder graphite and powder carbon have as purpose to withstand the weather conditions due to the high resistance to water and also provide protection, lubrication to the ready product, due to also being insulating, it not suffers the ionizing process that promotes proliferation of bacteria from reactions between soil, atmosphere and general chemical products used for fertilization, and in turn, transfer to soil an excessive wear of nutrients, therefore required and efficient for obtaining the preservation of all elements of composition to the end of be a fertilizer, which will promote soil enrichment through neutralization and not for being just one among others. The quantity applied varies in order that the values below or without its component compromises the forest fire fighting function, encapsulation and the values above the maximum pose a risk to generate the neutralization of all elements. When it is needed the reaction balanced and required to interest and soil study, we can vary the percent with other elements of composition, providing the same balance in order to obtain the desired reaction either on a quick or delayed manner.
The dolomitic or calcium limestone has as purpose providing calcium and magnesium to the plants and for controlling the pH of soil and add value to the final product. The amount applied ranges in a way that the values below the established ones will avoid obtaining a product to fight forest fires, then by addition of clay in replacement will not provide the agronomic quantity required and the values above the maximum ones cause an environmental problem in soil alkalinity.

The modified clay is intended for forest fire fighting and pressure-resistant extinguishing action of fire, absorbing heat and acting to hold ammonia not releasing it for low temperature and once an extreme heat takes place, releases the existing ammonia with water in abundance, the clay also has the function, in conjunction with guar or xanthan gum, of having an additional lubricity to the diluted product and facilitating the mechanisms of application, another important function is that when applied to predetermined line and with the wetting desired to obtain a higher concentration of product and it causes the fire to continue for a longer period in the same location so that to disrupt the film formed with the aid of components and in particular for the nitrogenous compound to cool down the flame local and the area, this occurs and the fire weakens so as to stop advancing and there a perfect fire line application starts while the fire tries to move forward elsewhere and other spots approximate and not find proper environment for continuity, and eliminates the vortex formed by the irregularity and heat emanated from different areas, another condition is little smoke in the region applied for not releasing water vapor. The amount applied varies in order that values below the established ones loose efficiency in fire fighting and values above the maximum precipitate and clog the nozzles after application.

The elements zinc, copper, sodium molybdate or ammonium, magnesium, sulfur and borax are added according to crop and agronomic requirements, the percentage values have their adjustments according to interest and may be completely replaced by one another or both in the same formula, only a mixture mixture of these elements is carried out in advance to oil for better distribution of these micro-nutrients and each prill (grain) will take in its proposal a small and important contribution of the chosen element and necessary to the culture applied, these key elements provide greater agronomic efficiency, with deeper roots, more accelerated growth, sturdier and more robust fruits and overall intended to produce more juice and bagasse, will obtain the advantage of reproducing in the same space (m²), and therefore it does not allow malnourishing or depletion of the soil or still forming a buffer effect in the area handled due to excess or lack of nutrients. Furthermore, the borax acts as buffering and scavenger of hydroxyl;

The potassium chloride is intended to provide resistance against weather conditions, besides acting as antifoaming and/or regulator of composition viscosity. The amount applied varies in order that values below the established ones loose the purpose and the agronomic values are not entirely preserved and values above prejudice the protection film.

The phosphor-gypsum or gypsum is intended to retain the phosphor and serve as load to formulation of the fertilizer. The amount applied varies in order that values below the established ones loose the purpose and the agronomic values are not entirely preserved and values above will cause the load and humidity to be too high.

The manufacturing process for the product of the present patent is conducted in the following sequence:
1 - A potassium and nitrogen compound, when used, is added to a container, needed within the percent indicated;
2 - Half of vegetable oil is added to the potassium and nitrogen compound and then well mixed until all grains are involved;
3 - The entire phosphoric acid is added still under the agitation from step 2 and the mixture is allowed to move during 5 minutes;
4 - The entire guar or xanthan gum is added still under the agitation from step 2 and the mixture is allowed to move during 5 minutes;
5 - The entire amount of limestone is slowly added, in case of basic composition, or the entire amount of modified clay is added, in case of fireproof composition, and after the complete amount is applied, it must be allowed to move on the mixture during 10 minutes, not interrupting the agitation;
6 - The other half of oil is added always under agitation and in higher speed than the initial, allowing it remains during 3 minutes;
7 - The entire powder graphite or powder carbon quantity indicated are slowly added under agitation in case of basic composition, and allowed to remain during 5 to 10 minutes;
8 - In case of product with micronutrients, the previously prepared micronutrient mix is added in the following sequence:
   a - A part of the vegetable oil is separated from the formula and copper is added, if used, mixing it well;
   b - Zinc is added, if used, and it must be well mixed onto the mixture above;
   c - The indicated value of molybdate, if used, is segregated and added, and it must be poured at once on the mixture in order to not result in a hard mass, by pouring it this not occurs and facilitate to it remain in liquid state;
   d - Sulfur is added, if used, as per the percent indicated in the formula;
   e - Borax is added, if used, as per the percent indicated in the formula; and
   f - Magnesium is added, if used, as per the percent indicated in the formula; and
9 - Gypsum or phosphor-gypsum is added, if used, as per the percent indicated in the formula.

The process for applying the basic composition with or without micro-nutrients of the fertilizer referred in the present patent is undertaken in conventional manner.

The encapsulation of composition occurs by means of the following mechanisms provided by some components:
a) The vegetable oil has the function to provide lubricity and stability in the composition when stored, preserving it against moisture action;
b) The guar or xanthan gum has the purpose to seal the composition within the reaction, avoiding water releasing both through calcium or clay and for being alkaline, it provides good diluted elasticity, either in conjunct with limestone or clay, thus promoting a hard-to-breach coating and provided with the required elasticity; and
c) The powder graphite and powder carbon are intended to withstand weather conditions, due to the high waterproof resistance and also to provide protection, lubrication to the ready product, and for also being insulating, it not suffers the ionizing process that promotes the proliferation of bacteria arising from the reaction between the soil, atmosphere, plant and chemical products often used for fertilization;

After application of aqueous solution on the vegetable substrate and soil, a fire stop barrier is formed. When the fire reaches the range where the product was applied, the intensity of flames is almost instantly diminished and such flames are extinguished. The efficiency of the product is resulting from the physical and chemical reaction triggered by the contact between the fire and the product spread over the substrate, all by means of the following mechanisms provided by some of the components:
a) Urea generates ammonia by reaction of the product under action of water and heat, displacing the oxygen of air along with the substrate, removing one of the components from the fire triangle;
b) Modified clay acts as thickener, trap and bonder of ashes, adhering the composition on the substrate and avoiding evaporation of water, thus eliminating one of the main forms of uncontrolled propagation of new fire outbreaks;
c) Vegetable oils acts as the feature to instantly interrupt the overheating and preserve the elements of the composition; and
d) Guar or xanthan gum, when diluted, acts forming an extremely viscous gel to be applied in forest fire fighting for retaining the water and avoiding it to easily burn out.

The process for applying the fertilizer, fire-extinguisher, fire-spreading preventer composition of the present patent, is done by diluting from 8 to 20 of water, in dry product weight, in quantity sufficient to achieve 100%.

## Claims

1. Encapsulated nitrogen fertilizer composition with fire-extinguishing and fire-spreading preventing option, **characterized by** fire extinguisher and fire spread preventer with the following formula:
1 - agricultural urea 50 - 80%
2 - vegetable oil 5 - 20%
3 - phosphoric acid 0.000 - 5%
4 - guar gum 0.005 - 7%
5 - powder graphite 0.000 - 3%
6 - dolomitic limestone 0.005 - 5%
7 - modified clay 0.000 - 15%
8 - powder zinc 0.000 - 3%
9 - powder copper 0.000 - 3%
10 - sodium molybdate 0.000 - 2%
11 - magnesium 0.000 - 5%
12 - sulfur 0-000 - 5%
13 - borax 0.000 - 2%
14 - potassium chloride 0.000 - 15%
15 - gypsum 0.000 - 20%

2. Encapsulated nitrogen fertilizer composition, according to claim 1, alternatively **characterized by** encapsulated nitrogen fertilizer composition with micro-nutrients with the following formula:
1 - agricultural urea 50 - 80%
2 - vegetable oil 5 - 20%
3 - phosphoric acid 0.000 - 5%
4 - guar gum 0.005 - 7%
5 - powder graphite 0.000 - 5 %
6 - dolomitic limestone 0.000 - 15 %
7 - powder zinc 0.000 - 3%
8 - powder copper 0.000 - 3%
9 - sodium molybdate 0.000 - 2%
10 - magnesium 0.000 - 5%
11 - sulfur 0.000 - 5%
12 - borax 0.000 - 2%
13 - potassium chloride 0.000 - 80%
14 - gypsum 0.000 - 20%

3. Encapsulated nitrogen fertilizer composition, according to claim 1, alternatively **characterized by** encapsulated nitrogen fertilizer composition with the following formula:
1 - agricultural urea 50 - 80%
2 - vegetable oil 5 - 20%
3 - phosphoric acid 0.000 - 5%
4 - guar gum 0.005 - 7%
5 - powder graphite 0.000 - 5%
6 - dolomitic limestone 0.000 - 15 %
7 - potassium chloride 0.000 - 80%
8 - gypsum 0.000 - 20%

4. Encapsulated nitrogen fertilizer composition with fire-extinguishing and fire-spreading preventing option, according to claim 1, alternatively **characterized by**, the agricultural urea may be replaced by technical urea in the same proportion ratio; guar gum may be replaced by xanthan gum in the same proportion ratio; dolomitic or magnesium limestone may be replaced by calcium limestone; powder graphite may be replaced by powder carbon; sodium molybdate may be replaced by ammonium molybdate in the same proportion ratio; and the gypsum may be replaced by phosphogypsum in the same proportion ratio and for fireproof action, the limestone and the powder carbon or graphite shall be either partially or completely replaced by modified clay.

5. Encapsulated nitrogen fertilizer composition with fire-extinguishing and fire-spreading preventing option, according to claim 1, **characterized by** preferential composition of the basic fertilizer with micronutrients and fireproof presented in this patent is as follows:
1 - agricultural urea 70%
2 - vegetable oil 7 %
3 - phosphoric acid 2%
4 - guar gum 1%
5 - powder graphite 2 %
6 - dolomitic limestone 1 %
7 - modified clay 12%
8 - powder zinc 0.05 %
9 - powder copper 0.05 %
10 - sodium molybdate 0.05%
11 - magnesium 0.05 %
12 - sulfur 0.05 %
13 - borax 0.05 %
14 - gypsum 4.7 %

6. Encapsulated nitrogen fertilizer composition with fire-extinguishing and fire-spreading preventing option, according to claim 1, **characterized by** fire extinguisher and fire spread preventer all by means of the following mechanisms provided by some of the components:
a) Urea generates ammonia by reaction of the product under action of water and heat, displacing the oxygen of air along with the substrate, removing one of the components from the fire triangle;
b) Modified clay acts as thickener, trap and bonder of ashes, adhering the composition on the substrate and avoiding evaporation of water, thus eliminating one of the main forms of uncontrolled propagation of new fire outbreaks;
c) Vegetable oils acts as the feature to instantly interrupt the overheating and preserve the elements of the composition; and
d) Guar or xanthan gum, when diluted, acts forming an extremely viscous gel to be applied in forest fire fighting for retaining the water and avoiding it to easily burn out.

7. Encapsulated nitrogen fertilizer composition, according to claim 2, **characterized by** preferential composition of the basic fertilizer with micronutrients presented in this patent is as follows:
1 - agricultural urea 70%
2 - vegetable oil 5 %
3 - phosphoric acid 2%
4 - guar gum 1%
5 - powder graphite 2 %
6 - dolomitic limestone 1 %
7 - powder zinc 0.05%
8 - powder copper 0.05 %
9 - sodium molybdate 0.05 %
10 - magnesium 0.05 %
11 - sulfur 0.05%
12 - borax 0.05 %
14 - potassium chloride 9.7 %
15 - gypsum 9 %

8. Encapsulated nitrogen fertilizer composition, according to claim 2, **characterized by** preferential composition of the basic fertilizer presented in this patent is as follows:
1 - agricultural urea 70%
2 - vegetable oil 5 %
3 - phosphoric acid 2%
4 - guar gum 1%
5 - powder graphite 2 %
6 - dolomitic limestone 1 %
7 - potassium chloride 10 %
8 - gypsum 9 %

9. Encapsulated nitrogen fertilizer composition, according to claim 2, **characterized by**, encapsulation of composition occurs by means of the following mechanisms provided by some components:
a) The vegetable oil has the function to provide lubricity and stability in the composition when stored, preserving it against moisture action;
b) The guar or xanthan gum has the purpose to seal the composition within the reaction, avoiding water releasing both through calcium or clay and for being alkaline, it provides good diluted elasticity, either in conjunct with limestone or clay, thus promoting a hard-to-breach coating and provided with the required elasticity; and
c) The powder graphite and powder carbon are intended to withstand weather conditions, due to the high waterproof resistance and also to provide protection, lubrication to the ready product, and for also being insulating, it not suffers the ionizing process that promotes the proliferation of bacteria arising from the reaction between the soil, atmosphere, plant and chemical products often used for fertilization.

10. Manufacture process of encapsulated nitrogen fertilizer composition with fire-extinguishing and fire-spreading preventing option with the composition cited in claim 1, **characterized in** the following sequence:
1 - A potassium and nitrogen compound, when used, is added to a container, needed within the percent indicated;
2 - Half of vegetable oil is added to the potassium and nitrogen compound and then well mixed until all grains are involved;
3 - The entire phosphoric acid is added still under the agitation from step 2 and the mixture is allowed to move during 5 minutes;
4 - The entire guar or xanthan gum is added still under the agitation from step 2 and the mixture is allowed to move during 5 minutes;
5 - The entire amount of limestone is slowly added, in case of basic composition, or the entire amount of modified clay is added, in case of fireproof composition, and after the complete amount is applied, it must be allowed to move on the mixture during 10 minutes, not interrupting the agitation;
6 - The other half of oil is added always under agitation and in higher speed than the initial, allowing it remains during 3 minutes;
7 - The entire powder graphite or powder carbon quantity indicated are slowly added under agitation in case of basic composition, and allowed to remain during 5 to 10 minutes;
8 - In case of product with micronutrients, the previously prepared micronutrient mix is added in the following sequence:
a - A part of the vegetable oil is separated from the formula and copper is added, if used, mixing it well;
b - Zinc is added, if used, and it must be well mixed onto the mixture above;
c - The indicated value of molybdate, if used, is segregated and added, and it must be poured at once on the mixture in order to not result in a hard mass, by pouring it this not occurs and facilitate to it remain in liquid state;
d - Sulfur is added, if used, as per the percent indicated in the formula;
e - Borax is added, if used, as per the percent indicated in the formula; and
f - Magnesium is added, if used, as per the percent indicated in the formula; and
g. Gypsum or phosphor-gypsum is added, if used, as per the percent indicated in the formula.

11. Application process of encapsulated nitrogen fertilizer composition with fire-extinguishing and fire-spreading preventing option with the composition cited in claim 1, **characterized by** diluting from 8 to 20 % of water, in dry product weight, in quantity sufficient to achieve 100%.
